# EUROPÄISCHE PATENTANMELDUNG

(11) **EP 0 579 043 A1**
(43) Veröffentlichungstag der Anmeldung: **19.01.1994**
(21) Anmeldenummer: 93110491.3
(22) Anmeldetag: 01.07.1993
(51) Int. Cl.: E04C 2/26, E04C 2/38

(54) **Plattenförmiger Hohlkörper**

(30) Priorität: 11.07.1992 DE 9209360 U
(71) Anmelder: REHAU AG + Co, 95111 Rehau (DE)
(72) Erfinder: Pennerath, Eddy, F-57343 Morhange (FR)

(57) **Zusammenfassung**

Die Erfindung betrifft einen plattenförmigen Hohlkörper mit Verbindung der Randbereiche durch Abstand haltende Stützprofile. Der umschlossene Hohlraum dieses Hohlkörpers ist mit einem Stützschaum ausgefüllt. Die Abschlußprofile nehmen die freien Ränder der oberen und unteren Deckplatte schaumdicht auf. Die Erfindung wird darin gesehen, daß die den Hohlraum (5) umschließende Deckplatte einstückig ist mit einem Umbug (13) im vorderen Kantenbereich und einer überlappenden Abkantung (14) der jeweils freien Ränder (111, 121) der Deckplatte (11, 12) im hinteren Kantenbereich. Die seitlichen Abschlußprofile (3) schließen den Umbug (13) bzw. die Abkantung (14) im vorderen und hinteren Kantenbereich schaumdicht ab. Von der Basis (38) der Abschlußprofile (3, 4) ragen in den Hohlraum (5) hineinragende, zur Verankerung der Abschlußprofile (3, 4) im Stützschaum (2) dienende Fortsätze (6) auf.

## Beschreibung

Die Neuerung betrifft einen plattenförmigen Hohlkörper mit Verbindung der oberen und unteren Deckplatte im vorderen und hinteren Kantenbereich, wobei die seitlichen Abschlußteile U-förmig profilierte Endstücke sind, welche die freien Ränder der oberen und unteren Deckplatte über die Plattenebene schaumdicht aufnehmen und wobei der von der oberen und unteren Deckplatte sowie den seitlichen Abschlußteilen umschlossene Hohlraum mit einem Stützschaum ausgefüllt ist.

Aus der DE-A 23 11 104 ist ein vorgefertigtes, flächenförmiges Leichtbauteil bekannt, bei dem zwei Verkleidungsplatten durch eine Randzarge in Abstand voneinander gehalten sind. Die Randzarge besteht aus einem Rahmen aus Profilleisten mit hochgezogenen Rändern, in die bzw. hinter die die Oberflächen der Verkleidungsplatten mit ihren Rändern eingeschoben sind. Der dadurch gebildete Hohlraum ist mit einem Hartschaumstoff ausgeschäumt.

Zur Herstellung der bekannten Leichtbauplatte ist es erforderlich, daß zunächst der Zargenrahmen gebildet wird, in dessen hochgezogene Ränder die Verkleidungsplatten eingeschoben werden. Dies bedingt einen erhöhten Montageaufwand und gibt keine Gewähr für einen schaumdichten Verbund der Verkleidungsplatten mit der Randzarge.

Hier setzt die Neuerung ein, die es sich zur Aufgabe gestellt hat, eine einfache, montagefreundliche und dennoch schaumdichte Randverbindung zweier im Abstand voneinander angeordneter, plattenförmiger Oberflächen zu schaffen.

Neuerungsgemäß wird dazu vorgeschlagen, daß die den Hohlraum umschließende Deckplatte einstückig ist mit einem Umbug im vorderen Kantenbereich und einer überlappenden Abkantung der jeweils freien Ränder im hinteren Kantenbereich, daß die seitlichen Abschlußprofile den Umbug bzw. die Abkantung im vorderen und hinteren Kantenbereich schaumdicht abschließen, und daß von der Basis der Abschlußprofile in den Hohlraum hineinragende, zur Verankerung der Abschlußprofile im Stützschaum dienende Fortsätze aufragen.

Der vorgeschlagene plattenförmige Hohlkörper ist denkbar einfach herzustellen. Hierfür wird beispielsweise eine langgestreckte Platte aus biegbarem Werkstoff so gebogen, daß im vorderen Kantenbereich der später verstärkten Platte ein glatter Umbug entsteht. Im späteren hinteren Kantenbereich der verstärkten Platte werden die freien Plattenkanten abgekantet und zwar in der Weise, daß sich die Plattenkanten überlappen. Die sich überlappenden Plattenkanten können beispielsweise durch Verklebung derart aufeinander festgelegt werden, daß durch diese Biege- und Befestigungsvorgänge ein im Querschnitt offenes Hohlelement geschaffen worden ist.

An bzw. in die offenen Seitenflächen dieses Hohlelementes werden neuerungsgemäß die Abschlußprofile an- bzw. eingefügt, wobei die freien Ränder der Platte einschließlich der Umbugränder im vorderen Kantenbereich sowie der Randbereich der sich überlappenden Abkantung im hinteren Kantenbereich schaumdicht von den Abschlußprofilen aufgenommen werden.

Hierfür können die Abschlußprofile randnah eingeformte Nutenvertiefungen zur Aufnahme der freien Plattenränder aufweisen. Als vorteilhaft erweist es sich hier, daß am Grund dieser Nutenvertiefungen eine Dichtmittelschicht angeordnet ist, über welche die schaumdichte Verbindung zwischen den Plattenrändern und den Abschlußprofilen hergestellt wird.

In einer anderen Ausführungsform übergreifen die Abschlußprofile die Plattenränder jeweils mit einem flachen Fortsatz. In diesem Fall kann an den übergreifenden Plattenrändern im Bereich der Abschlußprofile eine Dichtmittelschicht aufgetragen sein.

In einer weiteren Version können die Plattenränder die Oberflächen der Abschlußprofile halternd übergreifen. In diesem Fall können die über den Abschlußprofilen frei liegenden Plattenkanten hinter den Abschlußprofilen leicht umgebogen sein. Diese Version wird dann bevorzugt, wenn die seitlichen Kanten auf der Plattenoberfläche, die durch das Einschieben der Plattenränder in die Nutenvertiefungen bzw. unter den flachen Fortsatz der Abschlußprofile entstehen, nicht erwünscht ist.

Zur besseren Verankerung der Abschlußprofile in den zugeordneten Randbereichen des ausgeschäumten Plattenhohlraums weisen die von der Basis der Abschlußprofile in den Hohlraum verlaufenden Fortsätze an ihrem jeweils freien Ende einen senkrecht zur Fortsatzachse angeformten Verankerungsschenkel auf. Zusätzlich zu diesem Verankerungsschenkel können in die tragenden Fläche der Fortsätze Verankerungsdurchbrechungen für den Durchtritt des Stützschaums eingebracht sein.

Die neuerungsgemäße Platteneinheit bildet eine Leichbauplatte, die auch größeren Belastungen ausgesetzt werden kann. Hierfür sorgen unter anderem die kompakten, seitlichen Abschlußprofile. Beteiligt an dieser Belastbarkeit ist aber auch die einstückige Herstellung des Plattenkörpers mit dem Umbug im vorderen Kantenbereich und der Überlappung im hinteren Kantenbereich. Schließlich sorgt die Schaumfüllung mit der an die Bedürfnisse anpassbaren Härte des Füllschaums für eine zusätzliche Versteifung der neuerungsgemäßen Leichtbauplatte.

Diese kann beispielsweise im Bereich der Abkantung mit einer Scharnierachse versehen werden, so daß die Platte schwenkbar um die Scharnierachse gelagert sein kann. Sie eignet sich auf diese Weise z. B. als Tischplatte in Flugzeugen, Reisezügen usw.. Darüberhinaus kann sie als Sandwich-Leichtbauplatte in verschiedenster Weise eingesetzt werden.

In der Zeichnung sind Ausführungsbeispiele der neuerungsgemäßen Leichtbauplatte schematisch dargestellt; es zeigt:
- Fig. 1: eine perspektivische Draufsicht im Teilschnitt
- Fig. 2: einen Querschnitt durch das Abschlußprofil mit in Nuten eingeschobenen Plattenrändern.
- Fig. 3: einen Querschnitt durch die Verbindung Abschlußprofil -
Plattenränder mit Dichtmittel
- Fig. 4: einen Querschnitt durch die Verbindung Abschlußprofil -
Plattenränder mit das Abschlußprofil übergreifenden Plattenrändern.

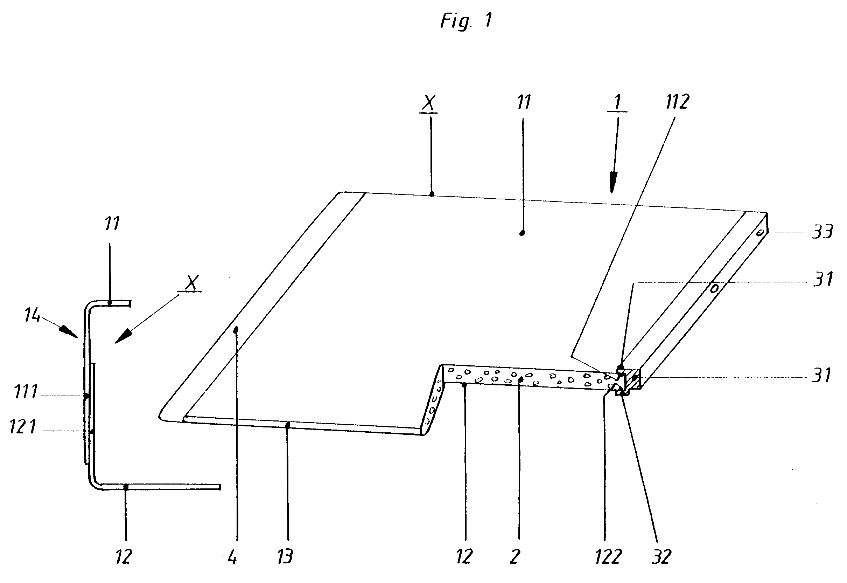

Fig. 1 zeigt den plattenförmigen Hohlkörper 1 mit dem oberen Deckplattenbereich 11 und dem unteren Deckplattenbereich 12. Im vorderen Kantenbereich ist der Umbug 13 dargestellt, der den oberen Plattenbereich 11 mit dem unteren Plattenbereich 12 einstückig verbindet. In der Detailskizze X ist der hintere Kantenbereich 14 dargestellt mit der sich überlappenden Abkantung der oberen und unteren Plattenränder 111, 121.

Im rechten unteren Bereich ist ein Teilschnitt des plattenförmigen Hohlelementes 1 gezeigt, aus dem sich die Schaumstoffüllung 2 des zwischen dem oberen Plattenbereich 11 und dem unteren Plattenbereich 12 gebildeten Hohlraums ergibt.

Die seitlichen freien Kanten 112, 122 des oberen Plattenbereichs 11 und des unteren Plattenbereichs 12 sind in der gezeigten Darstellung von jeweils einem flachen Fortsatz 31, 32 des seitlichen Abschlußprofils 3 übergriffen. Spiegelbildlich zum seitlichen Abschlußprofil 3 ist auf der gegenüberliegenden Seite des plattenförmigen Hohlkörpers 1 das seitliche Abschlußprofil 4 angeordnet.

Im Bereich der hinteren Abkantung 14 ist in das seitliche Abschlußprofil 3 eine Scharnieröffnung 33 eingebracht, welche die Scharnierachse des plattenförmigen Hohlkörpers 1 definiert.

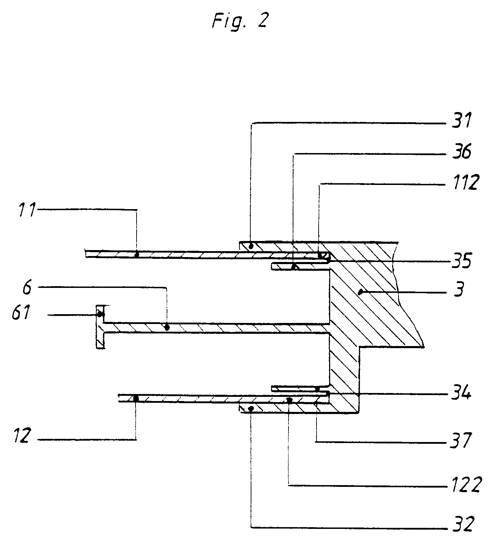

Fig. 2 zeigt einen Querschnitt durch das Abschlußprofil 3 mit in Nuten 34, 35 eingeschobenen Rändern 112, 122 des oberen Plattenbereichs 11 sowie des unteren Plattenbereichs 12. Die Nuten 34, 35 werden durch die flachen Fortsätze 31, 32 sowie die inneren Stege 36, 37 gebildet, die jeweils einstückig mit dem seitlichen Abschlußprofil verbunden sind. In die Nuten 34, 35 kann vor dem Einschieben der Plattenenden 112, 122 ein Dicht- bzw. Klebemittel eingebracht sein.

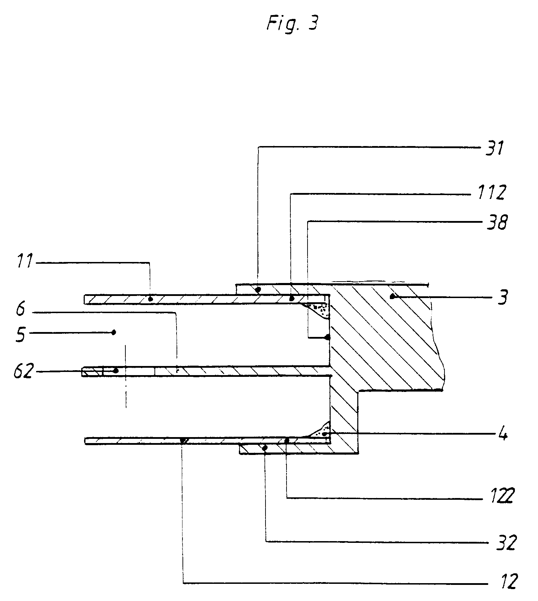

Fig. 3 zeigt den Querschnitt durch die Verbindung Abschlußprofil 3 - Plattenränder 112, 122 in der bereits in Fig. 1 angedeuteten Querschnittsform. Die flachen Fortsätze 31, 32 übergreifen in der gezeigten Darstellung die Plattenränder 112, 122, wobei im Bereich des Anschlags der Plattenränder 112, 122 an das seitliche Abschlußprofil 3 eine Dichtungs- bzw. Klebemasse 4 angedeutet ist.

In der Zeichnung ist ferner ein von der Basis 38 des seitlichen Abschlußprofils 3 in den Hohlraum 5 hineinragender Fortsatz 6 zu erkennen, welcher in seinem vorderen Bereich eine Verankerungsdurchbrechung 62 aufweist.

Diese Verankerungsdurchbrechung 62 kann zusätzlich zu dem senkrecht zur Fortsatzachse angeformten Verankerungsschenkel 61 (Fig. 2) in den Fortsatz 6 eingebracht sein.

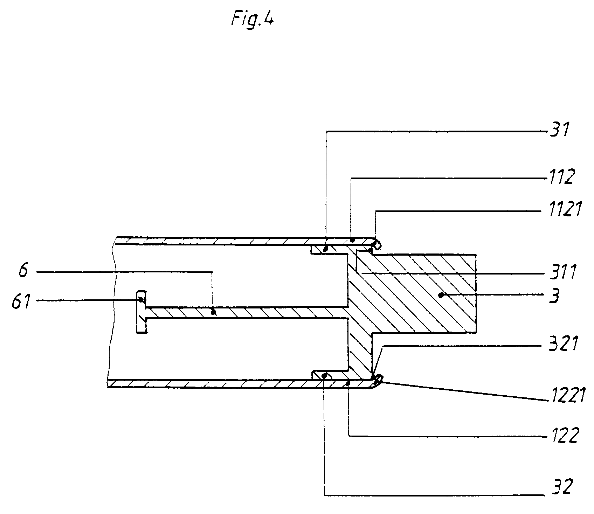

Schließlich zeigt Fig. 4 den Querschnitt durch die Verbindung Abschlußprofil 3 - Plattenränder 112, 122, wobei diese das Abschlußprofil 3 im Bereich der flachen Fortsätze 31, 32 übergreifen. Die Plattenränder 112, 122 sind in ihren freien Kantenbereichen 1121, 1221 um
die nach außen offenliegenden Kanten 311, 321 der Fortsätze 31, 32 herumgebogen. Auf diese Weise wird ein durchgehend glatter äußerer Abschluß des oberen und des unteren Plattenbereichs 11, 12 auf dem Abschlußprofil 3 erreicht. Die Darstellung zeigt ferner den Fortsatz 6 mit seinem senkrecht zur Fortsatzachse angeordneten Verankerungsschenkel 61 entsprechend Fig. 2.

## Patentansprüche

1. Plattenförmiger Hohlkörper mit Verbindung der Randbereiche durch abstandhaltende Abschlußprofile, wobei der umschlossene Hohlraum mit einem Stützschaum ausgefüllt ist und wobei die Abschlußprofile die freien Ränder der oberen und unteren Deckplatte schaumdicht aufnehmen, dadurch gekennzeichnet, daß die den Hohlraum (5) umschließende Deckplatte einstückig ist mit einem Umbug (13) im vorderen Kantenbereich und einer überlappenden Abkantung (14) der jeweils freien Ränder (111, 121) der Deckplatte (11, 12) im hinteren Kantenbereich, daß die seitlichen Abschlußprofile (3) den Umbug (13) bzw. die Abkantung (14) im vorderen und hinteren Kantenbereich schaumdicht abschließen, und daß von der Basis (38) der Abschlußprofile (3, 4) in den Hohlraum (5) hineinragende, zur Verankerung der Abschlußprofile (3, 4) im Stützschaum (2) dienende Fortsätze (6) aufragen.

2. Plattenförmiger Hohlkörper nach Anspruch 1, dadurch gekennzeichnet, daß die Abschlußprofile (3, 4) randnah eingeformte Nutenvertiefungen (34, 35) zur Aufnahme der freien Plattenränder (112, 122) aufweisen.

3. Plattenförmiger Hohlkörper nach Anspruch 2, dadurch gekennzeichnet, daß am Grund der Nutenvertiefungen (34, 35) eine Dichtmittelschicht angeordnet ist.

4. Plattenförmiger Hohlkörper nach Anspruch 1, dadurch gekennzeichnet, daß die Anschlußprofile (3, 4) die Plattenränder (112, 122) jeweils mit einem flachen Fortsatz (31, 32) übergreifen.

5. Plattenförmiger Hohlkörper nach Anspruch 4, dadurch gekennzeichnet, daß an den Plattenrändern (112, 122) im Bereich der Abschlußprofile (3, 4) eine Dichtmittelschicht aufgetragen ist.

6. Plattenförmiger Hohlkörper nach Anspruch 1, dadurch gekennzeichnet, daß die Plattenränder (112, 122) die flachen Fortsätze (31, 32) der Abschlußprofile (3, 4) halternd übergreifen.

7. Plattenförmiger Hohlkörper nach Anspruch 1, dadurch gekennzeichnet, daß die von der Basis (38) der Abschlußprofile (3, 4) in den Hohlraum (5) verlaufenden Fortsätze (6) an ihrem freien Ende einen senkrecht zur Fortsatzachse angeformten Verankerungsschenkel (61) besitzen.

8. Plattenförmiger Hohlkörper nach Ansprüchen 1 und 7, dadurch gekennzeichnet, daß in die tragenden Flächen der Fortsätze (6) Verankerungsdurchbrechungen (62) für den Durchtritt des Stützschaums (2) eingebracht sind.
